# EUROPEAN PATENT SPECIFICATION

(11) **EP 0 540 987 B1**
(45) Date of publication and mention of the grant of the patent: **27.03.1996**
(21) Application number: 92118351.3
(22) Date of filing: 27.10.1992
(51) Int. Cl.: B41J 25/304, B41J 2/51

(54) **Wide-swath printer/plotter using multiple pen cartridges**
Grossbereich-Drucker/Schreiber mit mehreren Schreibkassetten
Imprimante/tracteur à grande portée utilisant plusieurs cartouches d'écriture

(30) Priority: 04.11.1991 US 787297
(43) Date of publication of application: 12.05.1993
(73) Proprietor: Hewlett-Packard Company, Palo Alto, California 94304 (US)
(72) Inventor: Nguyen, Michael A., Cashew Road, Singapore 2367 (SG); Stewart, Lowell J., Poway, CA 92064 (US); Kline, Daniel S., Carlsbad, CA 92008 (US); Boeller, Robert A., Poway, CA 92064 (US); Ta, Chuong C., San Diego, CA 92129 (US); Haselby, Robert D., San Diego, CA 92129 (US)
(74) Representative: Liesegang, Roland, Dr.-Ing.

(56) References cited:
- US-A- 3 781 904
- US-A- 4 400 101
- US-A- 4 540 996
- US-A- 4 709 246
- US-A- 4 716 421
- US-A- 4 761 664
- PATENT ABSTRACTS OF JAPAN vol. 11, no. 56 (P-549)20 February 1987 & JP-A-61 221 764 (MATSUSHITA) 2 October 1986
- PATENT ABSTRACTS OF JAPAN vol. 7, no. 5 (M-184)11 January 1983 & JP-A57 165 281 (TOKYO SHIBAURA DENKI) 12 October 1982

## Description

### Related Applications

This application relates to copending application Serial No. 07/786,145 published as US-A-5289208 entitled AUTOMATIC PRINT CARTRIDGE ALIGNMENT SENSOR SYSTEM filed in the name of Haselby, and copending application Serial No. 07/785,650 published as US-A-5297017 entitled PRINT CARTRIDGE ALIGNMENT IN PAPER-AXIS filed in the names of Nguyen and Haselby, and copending application Serial No. 07/786,146 published as US-A-5241325 entitled PRINT CARTRIDGE CAM ACTUATOR LINKAGE filed in the name of Nguyen, all of which were filed on October 31, 1991 and are commonly owned by the assignee of this application.

### Background of the Invention

This invention relates generally to printers and plotters, and more specifically to printheads such as thermal inkjet cartridges mounted on a carriage which traverses back and forth across media in either sheet or roll form.

Thermal inkjet printers/plotters typically mount removable print cartridges on a carriage for traversing back and forth across a sheet of media which is periodically advanced along the media movement axis (typically called the X-axis). When the printer/plotter is used for monochrome printing, a single print cartridge is used, and the width of a printing swath is determined by the actual width of the nozzle portion of the print cartridge. When the printer/plotter is used for color printing, one or more additional print cartridges are mounted on the carriage. However, such additional cartridges have been mounted for straight-line alignment with each other along the carriage axis (typically called the Y-axis), and therefore the swath width is still determined by the actual width of the nozzle portion of the print cartridge. In some instances a single print cartridge may have multiple nozzle sets. For example, in the PaintJet family thermal inkjet printers of Hewlett-Packard Company, the black print cartridge has three nozzle sets which provide a wider printing swath than the corresponding color print cartridge which can be mounted alongside the black print cartridge in a straight-line alignment in the Y direction.

When thermal inkjet printing is used in large format printers/plotters, the throughput limitation due to swath width makes it difficult to compete with more expensive printers/plotters such as laser printers, electro-static plotters and the like.

From the US-A 4,540,996, there is known a printer/plotter device having multiple printheads for recording different colors. This printer/plotter device comprises a carriage, a first printhead removably mounted on said carriage and a second printhead separate from said first printhead and removably mounted on said carriage wherein each of the printheads comprises a plurality of nozzles. This document aimes at providing an image recording apparatus for high image quality at a high speed. Therefore, this document proposes a printhead/nozzle arrangement where double recording is prevented.

Accordingly, there is a need to provide a large format printer/plotter which increases throughput without having to design a new enlarged print cartridge.

This object is solved by a printer/plotter comprising the features of claim 1.

### Brief Summary of the Invention

Accordingly, the present invention provides an improved printer/plotter which mounts multiple print cartridges on the same carriage so that the print cartridges are offset from each other in the direction of the media axis (X-axis), with one of the cartridges being fixedly mounted and the others being adjustably mounted relative to the fixedly mounted cartridge. The invention provides for both electronic adjustment through selective on/off control of individual nozzles as well as mechanical adjustment through actual movement of one or more individual pen cartridges. The amount of adjustment needed is determined from image position data obtained by an on-board printer-image sensor in conjunction with carriage position data obtained by an on-board codestrip sensor.

### Drawings

FIG. 1 is a schematic perspective view of a large format printer/plotter, showing multiple print cartridges mounted on a carriage in accordance with a presently preferred embodiment of the invention;

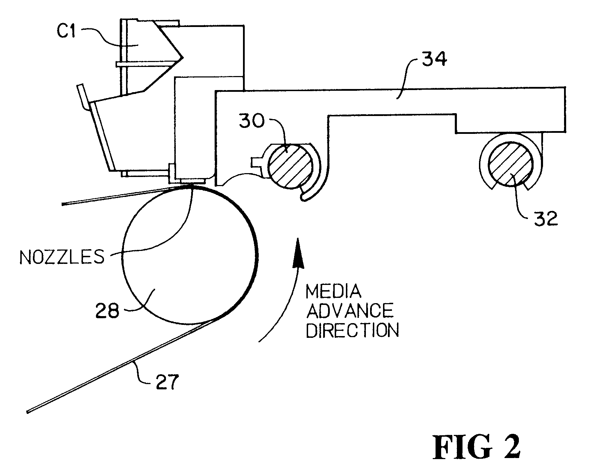

FIG. 2 is a schematic sectional view showing the carriage of FIG. 1 riding on two guide rods with removable print cartridges located forwardly of the guide rods;

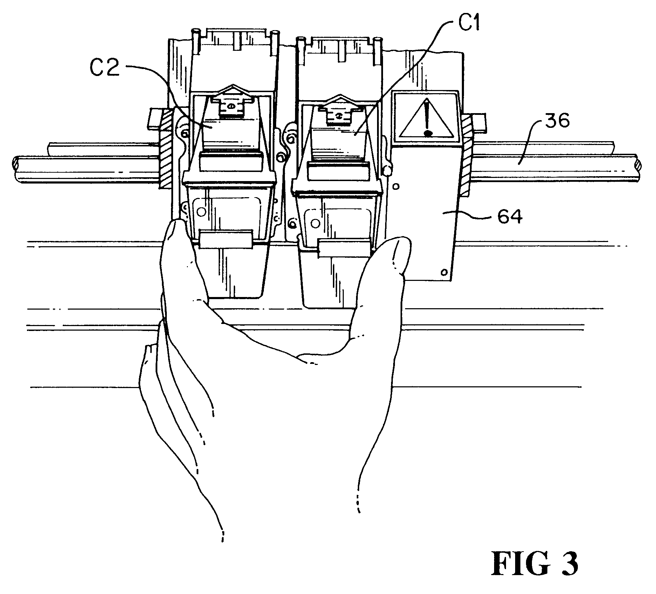

FIG. 3 is a front view showing two virtually identical print cartridges C1, C2 removably mounted on the carriage of FIG. 2 alongside a print-image sensor also mounted on the carriage, with an encoder strip passing through the carriage;

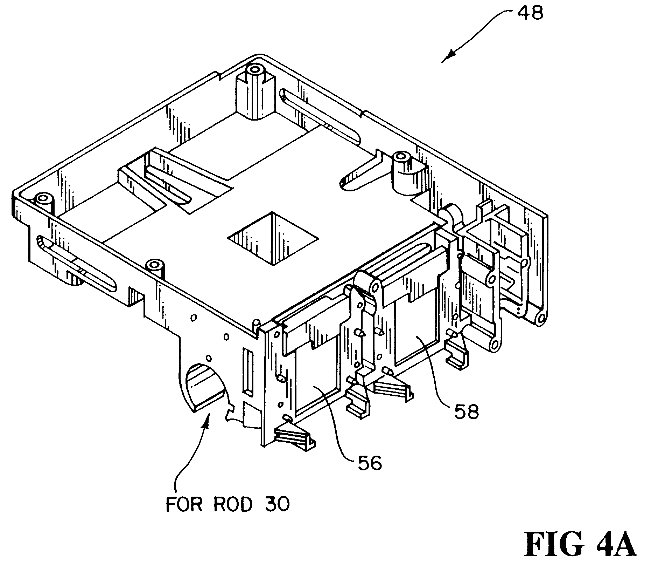

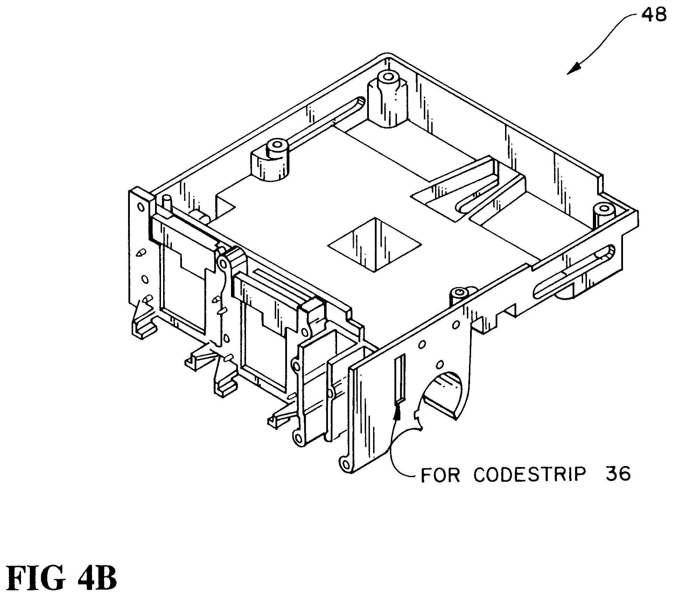

FIG. 4A is a left front view of a carriage shell, and FIG. 4B is a right front view of a carriage shell;
FIG. 5 is a bottom view of a carriage printed circuit board showing the mounting position of two print cartridge flex circuits, a light emitter, an optical print-image sensor, and a codestrip sensor;
FIG. 6 is a block diagram for the present invention showing the functional circuitry for three substantially identical print cartridges offset from each other in the X direction on the carriage;
FIG. 7A is a front view of a carriage shell, and FIG. 7B is the same view with a flex circuit attached to the rigid mounting plate for print cartridge C2;

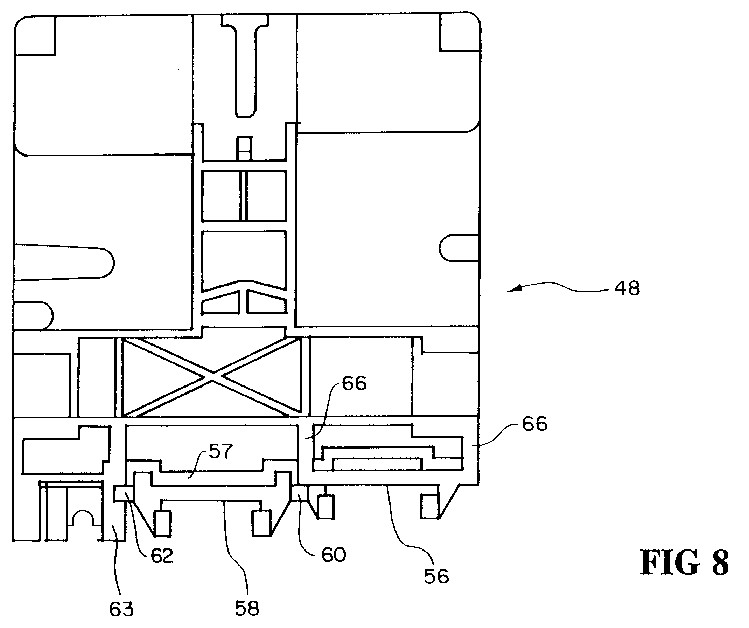

FIG. 8 is a bottom view of the carriage shell of FIG. 7A;
FIG. 9 is a perspective view of a chute for holding a print cartridge;

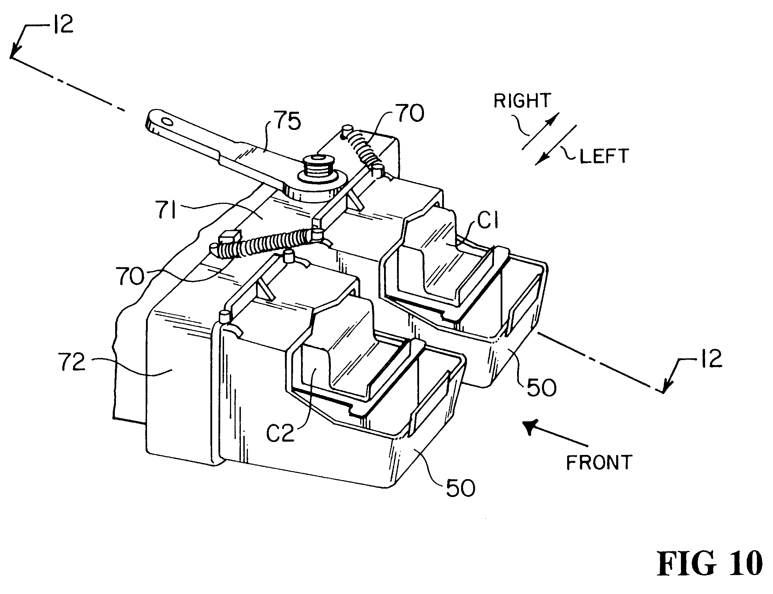

FIG. 10 is a fragmented perspective view of the front of a carriage with virtually identical print cartridges C1, C2 each mounted in a chute of FIG. 9, with a positioning cam engaging the chute holding print cartridge C1;
FIG. 11A is a perspective view showing the details of the positioning cam of FIG. 10 mounted on a base, and FIG. 11B is an exploded view of FIG. 11A;
FIG. 12 is a partially sectional view which is taken along the line 12--12 in FIG. 10, showing the manner of cam engagement of the chute holding print cartridge C1;
FIG. 13 is a schematic plan view showing the general arrangement of the nozzle arrays of the print cartridges C1, C2; and
FIG. 14 is a schematic plan view showing the relative positioning of the nozzles of FIG. 13 in the vicinity of the junction between print cartridges C1, C2.

### Detailed Description of Preferred Embodiment

In order to facilitate the solution of alignment problems between multiple print cartridges mounted on the same carriage, the preferred embodiment of the present invention includes a photosensor 16 mounted on the carriage which monitors the actual location of print-images on the media as illuminated by a light source 18 such as an LED. A detailed description of such a print-image monitoring system is found in copending application Serial No. 07/786,145 published as US-A-5289208 entitled AUTOMATIC PRINT CARTRIDGE ALIGNMENT SENSOR SYSTEM filed October 31, 1991 in the name of Haselby, which application is assigned to the assignee of the present application.

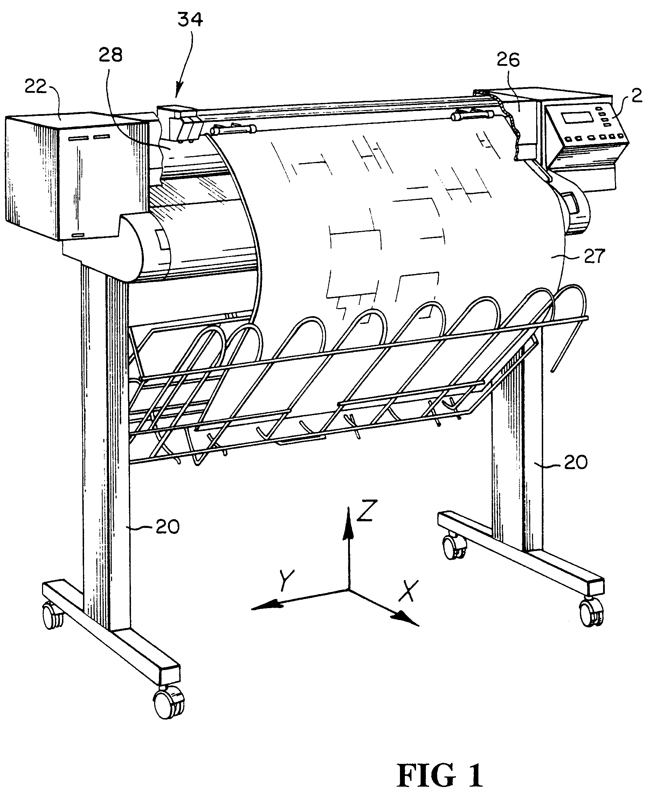

Fig. 1 is a schematic perspective view of a large format printer/plotter which incorporates the features of the present invention. The printer/plotter has a chassis supported from the floor by a pair of spaced legs 20. A housing includes printhead service station 22, a control panel 24, and a protective cover 26. The printer/plotter can handle large format media 27 which is either sheet-fed or roll-fed, including paper, vellum or film. As seen in the broken away section at the top of Fig. 1, a platen roller 28 extends transversely in the Y direction to provide a support and printing path at its upper surface for the medium upon which printing is to take place. Front and rear slider rods 30, 32 support a transversely movable print head carriage 34 having a plurality of thermal inkjet printheads mounted thereon which are positioned a precise distance above the platen roller 28. In order to assure high quality print resolution, the slider rods 30, 32 must be adequately supported and held straight. The details of a presently preferred slider rod support structure are described in copending application Serial No. 07/784,282 published as US-A-5195836 entitled LOW COST RIGID GUIDEWAY AND SUPPORT STRUCTURE FOR A PRINTER PLOTTER CARRIAGE filed October 29, 1991 which is assigned to the same assignee as the present application. The slider rods enable a thermal inkjet printhead carriage traveling on the rods to maintain a constant and precise spacing from the platen roller as the carriage traverses back and forth across the print medium.

The automatic determination of printhead/carriage position along the Y direction is provided by a codestrip 36 which is threaded through the carriage 34 in order to pass through a slotted sensor 38. The details of a presently preferred codestrip are described in copending application Serial No. 07/785,376 published as US-A-5276970 entitled IMPROVED CODESTRIP IN A LARGE-FORMAT IMAGE-RELATED DEVICE filed October 30, 1991 which is assigned to the assignee of the present application. The sensor 38 is mounted on the underside of a circuit board 40 disposed on top of the carriage in a forward position on a narrow extension of the board. Also mounted on the board are electronics for operation of of the sensor 38 as well as electronics for actuation of the printheads C1, C2. A rear interconnect plug 39 is used for transmitting signals from the carriage circuit board 40 to the main electronics board (not shown) of the printer/plotter.

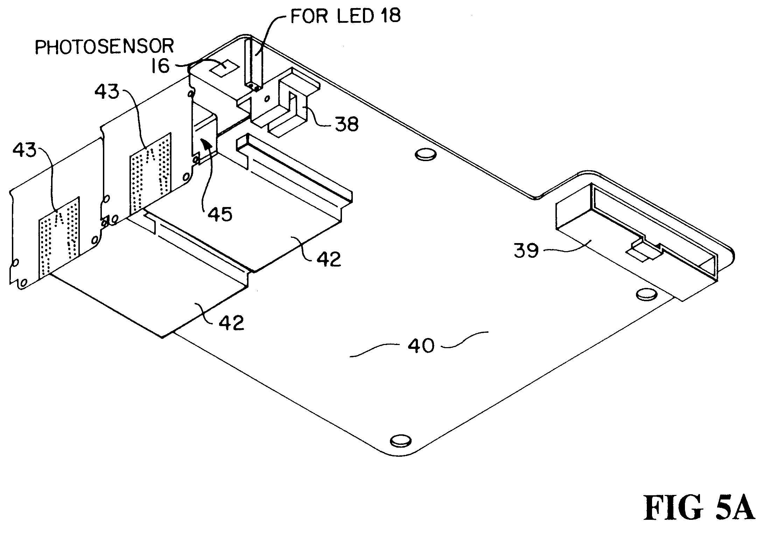

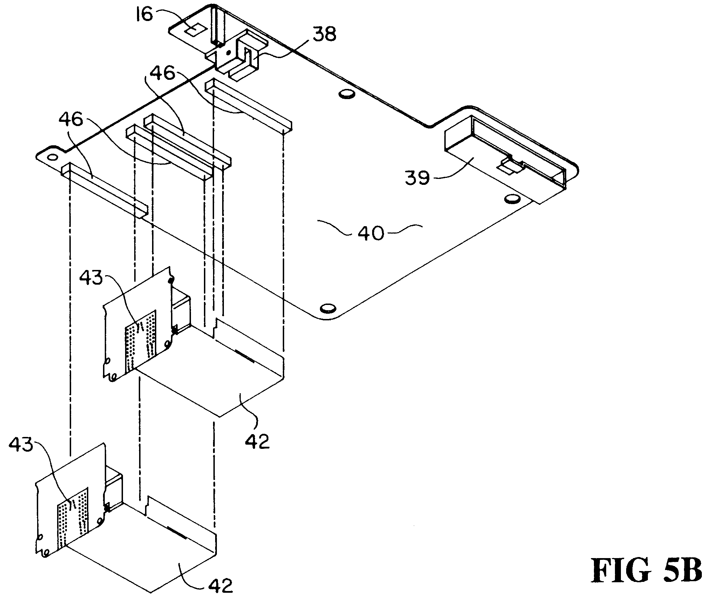

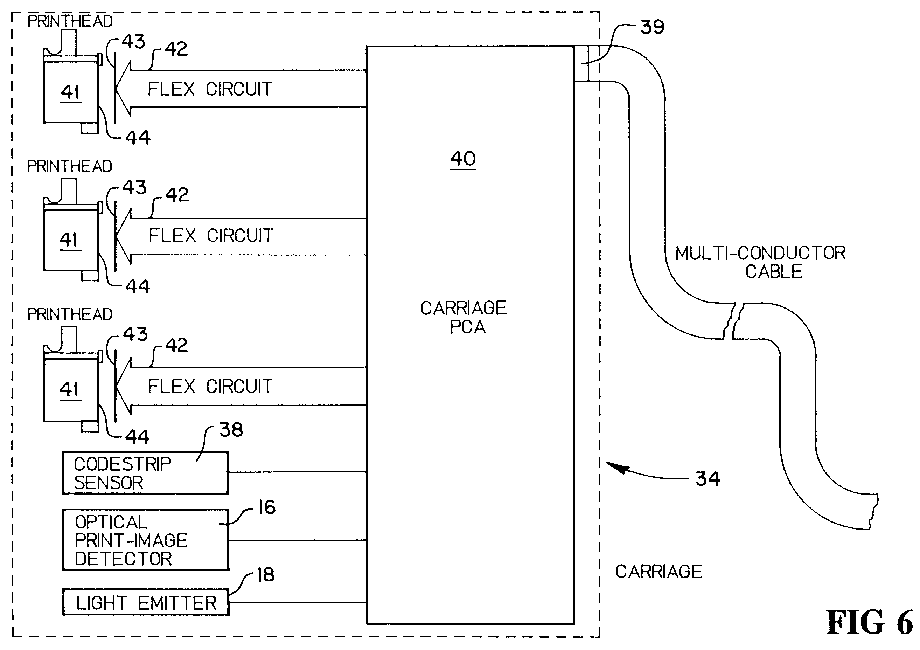

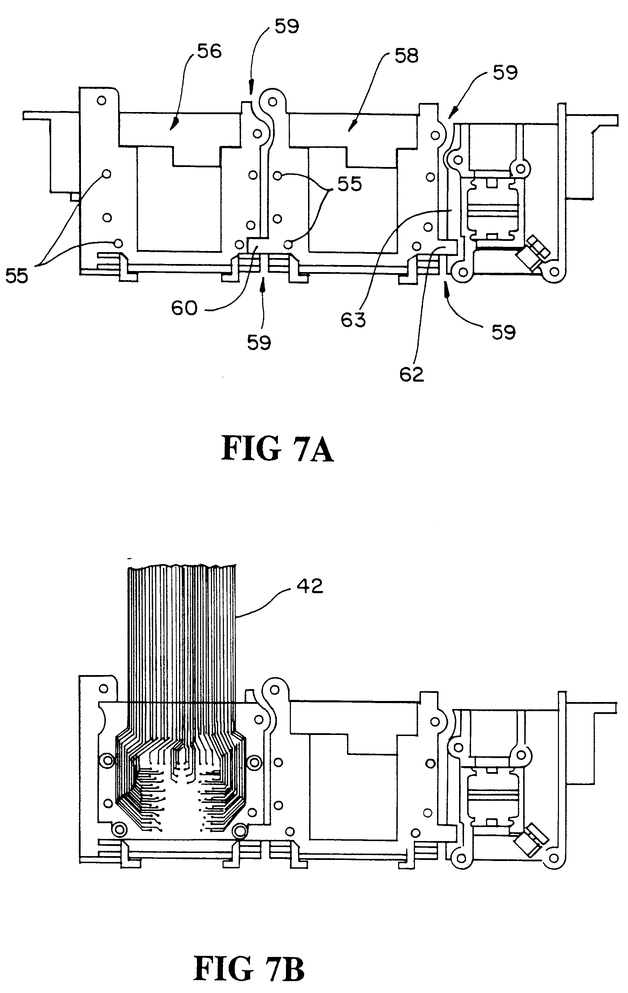

Generally speaking, the invention is not limited to only two offset printheads, but is also applicable to additional numbers of printheads offset from each other in the X direction in order to achieve wider print swaths for a single traverse of the carriage in the Y direction. As best shown in FIG. 6, the invention preferably provides for a plurality of substantially identical printheads 41 to be separately actuated through respective flex circuits 42 having solder interconnect pads 43 for electrical engagement with matching interconnects 44 on the printhead. In the preferred embodiment the flex circuits pass over the codestrip and rearwardly to their attachment junction 46 on the circuit board 40. The flex circuits are bent (see FIG. 5) to provide a tunnel-like passage 45 for the codestrip 36 as the flex circuits pass between their rearward attachment junctions 46 on the circuit board 40 to their generally vertical position mounted on a carriage shell 48 (see FIG. 7B). The printed circuit board 40 is mounted directly on top of the carriage shell.

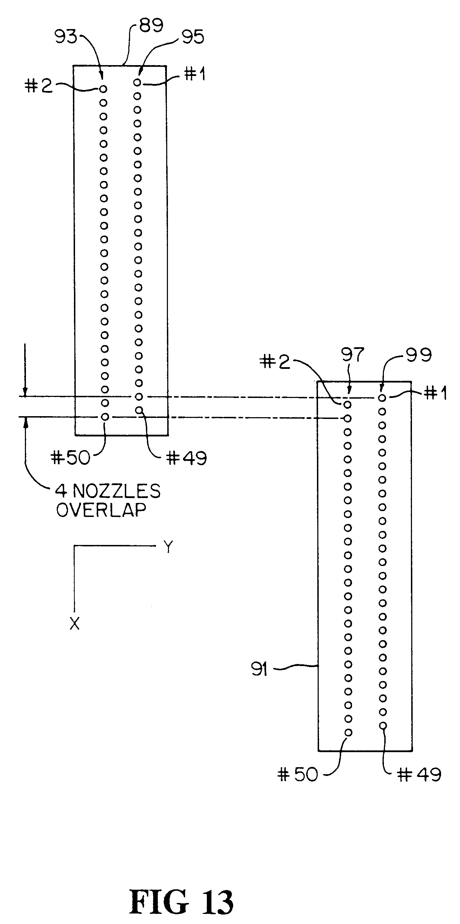

The first and second cartridges C1, C2 are side by side along the carriage axis (Y direction) and are offset relative to each other along the media scan axis (X direction), and can have overlapping nozzle rows along the media scan axis (see FIG. 13). Certain of the overlapping nozzles are electronically disabled in order to bring the remaining enabled nozzles into proper relationship with the nozzles of the other cartridge in the X direction. The fact that FIG. 13 shows overlapped nozzles from both C1 and C2 to be directly aligned in the Y direction means that the mechanical alignment through the cam-actuated position adjustment of print cartridge C1 has already taken place. It is to be noted that although the vertical columns of nozzles (i.e., columns in the X direction) appear schematically in FIGS. 13-14 to be in a straight line, the nozzles in each quadrant constituting a separate primitive (in other words, a quadrant in formed by a group of 12 or 13 nozzles fed from the same ink supply channel) are slightly staggered apart in the Y direction since only a single nozzle in each primitive can be fired at any single point in time). The presently preferred manner of electronically disabling nozzles and/or electronically delaying the firing of nozzles in order to obtain high quality print registration is described in copending application Serial No. 07/786,326 entitled FAST FLEXIBLE PRINTER/PLOTTER WITH ALIGNMENT CORRECTION filed October 31, 1991 in the name of Chen, Corrigan and Haselby, which application is assigned to the assignee of the present application.

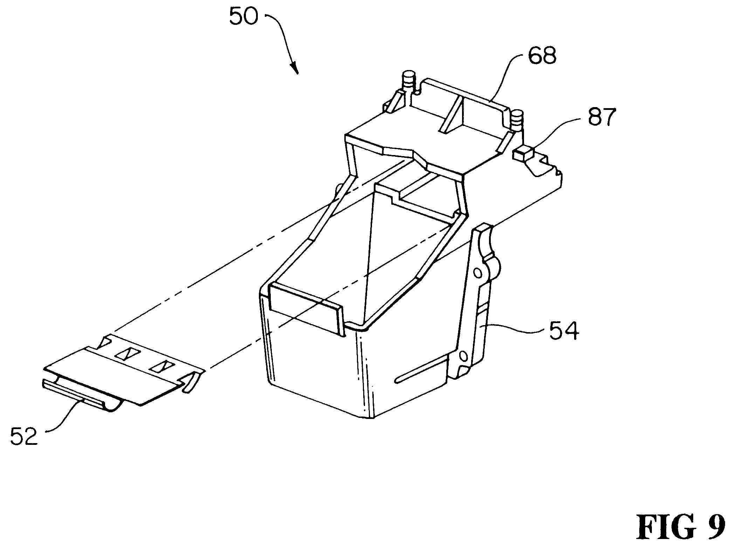

The structure of a chute 50 for mounting a pen cartridge such as the DeskJet brand of thermal inkjet printhead of Hewlett-Packard Company is shown in FIG. 9. In the illustrated embodiment, identical chutes 50 are used for mounting both cartridges C1, C2. Each chute includes a spring clip 52 for securely holding the cartridge, and a flange 54 having screw holes which match corresponding screw holes on the carriage shell. Matching pins 55 also fit into corresponding holes (not shown) to securely position each chute on the carriage shell 48 after the interconnect pad 43 on the forward end of the flex circuit 42 has been placed on a mounting plate (See FIG. 7B) so as to be sandwiched underneath the chute. The print cartridges C1, C2 are each separately manually insertable and manually removable from their respective chutes, in a conventional manner well known for DeskJet print cartridges.

A chute for cartridge C2 is secured to the carriage on rigid mounting plate 56, while a chute for cartridge C1 is secured to the carriage on flexible mounting plate 58. The flexibility of the mounting plate 58 for cartridge C1 is provided by a pair of matching flexible support bars 60, 62 located respectively at the lower left rear and the lower right rear of the mounting plate 58. The short bars extend in a direction generally parallel to the Y direction, with the left bar 60 being integrally attached to the rigid mounting plate 56, and the right bar 62 being integrally attached to a casing 63 for a print-image sensor unit 64 . These two bars constitute the only structural connection between the first mounting plate and the rest of the carriage structure, therefore leaving the flexible mounting plate 58 in a suspended position (note the gap 57 behind and the side gaps 59 adjacent flexible mounting plate 58) and subject to certain limited rotation about a pivotal axis 65. In contrast, rigid mounting plate 56 is integrated as part of the carriage shell through rigid arms 66.

The top of each chute includes a cam follower flange 68. When a chute is mounted on the flexible mounting plate 58, the flange 68 is biased rearwardly against a position adjustment cam 69 by a pair of retaining springs 70 attached respectively between the upper rear left and upper rear right of the chute to a cam support base 71 which is fixedly attached by its downward legs 72 to the left and right sides of the carriage shell. The springs are angled outwardly relative to each other in order to allow sufficient space for the cam position adjustment mechanism.

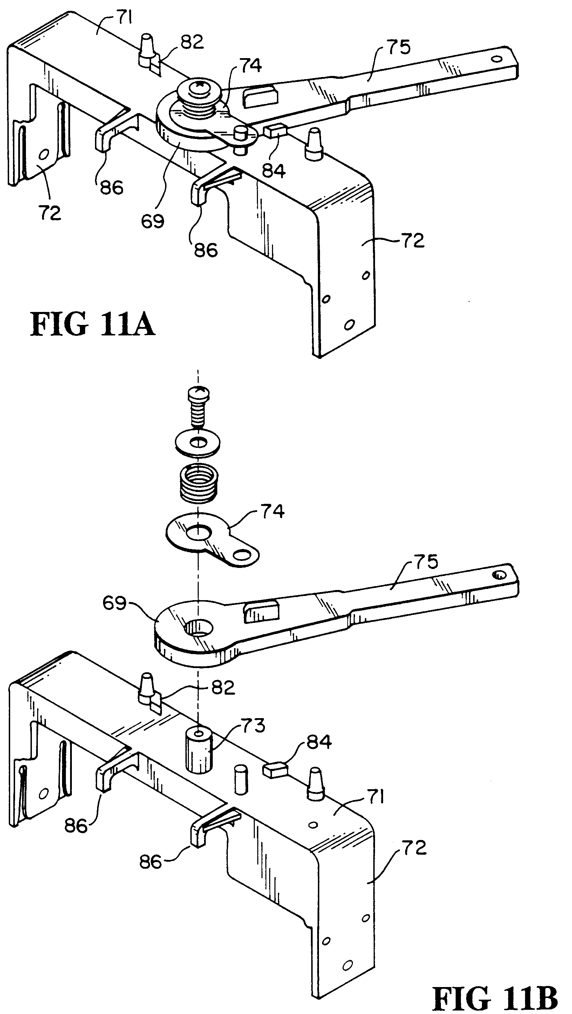

The adjustment cam is rotatably mounted on a pin 73 on the support base, and is held down by a spring-loaded washer 74 (See FIG. 11B). The cam is shaped so as to increase the distance between the cam pin 73 and the chute with increased counterclockwise rotation of the cam based on force applied to the cam lever 75. The details of a preferred linkage to the cam lever 75 are described in copending application Serial No. 07/786,146 published as US-A-5241325 entitled PRINT CARTRIDGE CAM ACTUATOR LINKAGE filed October 31, 1991 in the name of Nguyen, which application is assigned to the assignee of the present application.

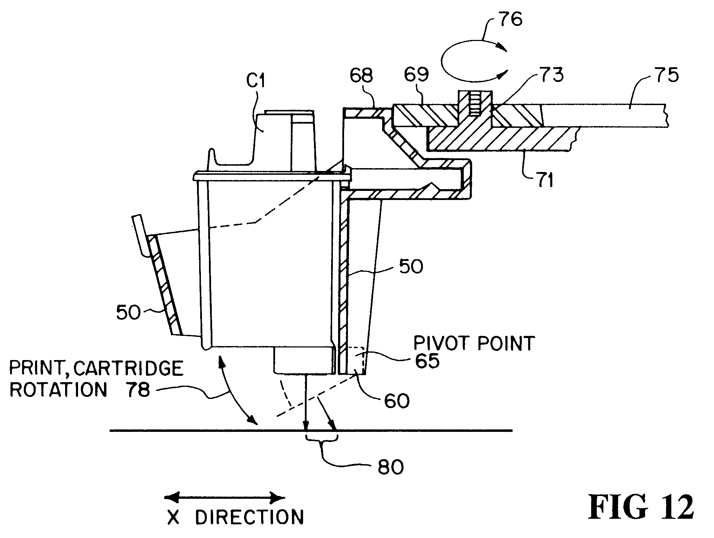

As best shown in FIG. 12, rotation 76 of the cam 69 causes proportional rotation 78 of the chute about the pivot axis 65. This changes the position of the cartridge C1 to vary the offset with cartridge C2 in the X direction, and also changes the direction of trajectory for ink as shown in the exaggerated schematic diagram at the bottom of FIG. 12 so as to move the ink drop location a distance 80 in the X direction. In order to prevent excessive rotation which might break the torsion bars 60, 62, there are cam stops 82, 84 provided on the cam support base, as well as additional stops 86 projecting forwardly from the top of the cam support base which engage lateral projections 87 on the chute.

In the preferred embodiment which uses DeskJet brand of print cartridges of Hewlett-Packard Company, each printhead has two columns of inkjet nozzles on each nozzle plate 89, 91. Thus four columns 93, 95, 97 and 99 of nozzles are provided. The first and second columns 93 and 95 are provided by cartridge C2 and the third and fourth columns 97 and 99 are provided by cartridge C1. Each printhead has fifty (50) nozzles each in a different X-direction position or row. Printhead C2 has twenty-five nozzles in the first column 93 commonly referred to as even numbered nozzles #2, #4, . . . #50 and twenty-five nozzles in the second column commonly referred to as odd numbered nozzles #1, #3, . . . #49. These nozzle ID #s therefore identify their row position. Likewise, printhead C1 has fifty (50) nozzles in the same array, with its first column 97 having nozzles in the even numbered rows and its second column 99 having nozzles in the odd numbered rows. Since the nozzles in each column are offset from each other in the X direction, each nozzle defines a unique and separately addressable row. Therefore, the row address and the column address uniquely define the position of every nozzle in both pen cartridges. By electronically disabling the overlapping nozzles, each nozzle in the entire array formed by both cartridges defines a unique and separately addressable row, thereby simulating a single wide-swath print cartridge. Of course this same technique would apply to multiple cartridges of more than two which would all be mounted to be offset from each other in the X direction.

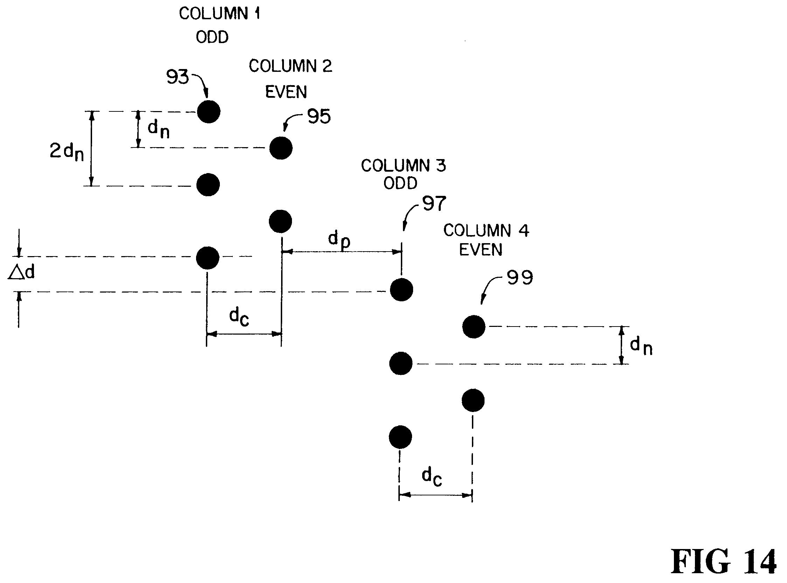

FIG. 14 illustrates the manner of measuring the nozzle offset dn, the column offset dc, the pen offset dp in the Y direction, and the inter-pen nozzle offset delta-d in the X direction. When the distance delta-d is greater than nozzle offset dn, the cam is rotated to lessen the offset between pen cartridges C1 and C2 in the X direction. When the distance delta-d is less than nozzle offset dn, the cam is rotated in the opposite direction to increase the offset between pen cartridges C1 and C2 in the X direction. Although the preferred embodiment provides for 3-4 rows of nozzle overlap between cartridges C1, C2, it is also possible to have no overlap as shown in FIG. 14 and still achieve the necessary mechanical adjustment by the cam. However, by using the overlapping nozzle technique, the amount of mechanical adjustment required is assured to be within certain minimal ranges, i.e., no more than 1/2 of the nozzle offset dn.

It is to be understood that while a preferred illustrative embodiment of the invention has been shown and described, various changes will be evident to those skilled in the art, which will nevertheless still be included within the scope of the invention as defined the the following claims.

## Claims

1. A thermal inkjet printer/plotter having an array of individual print elements (93-99) on multiple thermal inkjet printheads (C2, C1), comprising:
a carriage (34) movable along a carriage scan axis;
a first printhead (C2) removably mounted on said carriage (34), said first printhead having a plurality of print elements (93, 95);
a second printhead (C1) separate from said first printhead (2) and removably mounted on said carriage (34), said second printhead (C1) having a plurality of print elements (97, 99) and being displaced from said first printhead (C2) along a media axis (X); and
alignment means (42, 69) for enabling an array of selected print elements of said second printhead (C1) and an array of selected print elements of said first printhead (C2), and for adjusting the relative position along the media axis of the enabled array of said second printhead (C1) with respect to the enabled array of said first printhead (C2) such that the enabled arrays are non-overlapping along the media axis (X) and such that the enabled print elements of the second printhead (C1) and the enabled print elements of the first printhead (C2) that are closest along the media axis (X) are offset by a predetermined distance (Δd) along the media axis,
whereby the width of a swath printed by the enabled print elements of said first and second printheads (C2, C1) in a single traverse of said carriage (34) is greater than the width of a swath printed by only one of said first and second printheads in a single traverse of said carriage.

2. The printer/plotter of claim 1 wherein said first and second printheads (C2, C1) have identical arrays of printing elements.

3. The printer/plotter of claim 2 wherein said predetermined distance (Δd) is the same as the distance (dn) along the media axis between two adjacent printing elements of said first and second printheads (C2, C1).

4. The printer/plotter of claims 1, 2 or 3 wherein said printheads (C2, C1) are thermal inkjet printheads and said individual printing elements (93-99) are nozzles.

5. The printer/plotter of claims 1, 2, 3 or 4 wherein said alignment means includes separate offset mounting plates (56, 58) on said carriage (34) for each of said printheads (C2, C1).

6. The printer/plotter of claims 1, 2, 3, 4 or 5 wherein said alignment means includes selection means (42) for turning off certain of said printing elements on one of said first and second printheads.

7. The printer/plotter of claims 1, 2, 3, 4, 5 or 6 wherein said alignment means includes mechanical adjustment means (69) for changing the physical position of one of said first and second printheads (C2, C1) along the media axis (X).

8. The printer/plotter of claim 7 wherein said mechanical adjustment means includes flexible attachment means (70) for allowing one of said first and second printheads (C2, C1) to pivot about a pivot axis that is parallel to the carriage scan axis, and a cam (69) for causing such one of said first and second printhead to pivot about the pivot axis.

9. The printer/plotter of one of the preceding claims, which further includes additional mounting means for holding additional printheads in a position displaced from said first and second printheads as well as displaced from each other in the media feed direction.

## Patentansprüche

1. Thermischer Tintenstrahldrucker/-plotter mit einer Anordnung aus einzelnen Druckelementen (93 bis 99) auf mehreren thermischen Tintenstrahl-Druckköpfen (C2, C1), mit einem Schlitten (34), der längs eine Schlitten-Abtastachse bewegbar ist,
einem ersten Druckkopf (C2), der lösbar auf dem Schlitten (34) montiert ist, wobei der erste Druckkopf mehrere Druckelemente (93, 95) aufweist,
einem zweiten Druckkopf (C1), der von dem ersten Druckkopf (2) getrennt und lösbar auf dem Schlitten (34) montiert ist, wobei der zweite Druckkopf (C1) mehrere Druckelemente (97, 99) aufweist und relativ zu dem ersten Druckkopf (C1) längs eine Medienachse (X) versetzt ist, und
einer Ausrichtvorrichtung (42, 96) zum Freigeben einer Anordnung aus ausgewählten Druckelementen des zweiten Druckkopfes (C1) und einer Anordnung aus ausgewählten Druckelementen des ersten Druckkopfes (C2) und zum Einstellen der relativen Position längs der Medienachse der freigegebenen Anordnung des zweiten Druckkopfes (C1) relativ zu der freigegebenen Anordnung des ersten Druckkopfes (C2), so daß die freigegebenen Anordnungen sich längs der Medienachse (X) nicht überlappen und so daß die freigegebenen Druckelemente des zweiten Druckkopfes (C1) und die freigegebenen Druckelemente des ersten Druckkopfes (C2), welche am nächsten bei der Medienachse (X) liegen, um eine vorgegebene Strecke (Δd) längs der Medienachse versetzt sind,
wobei die Breite einer mit den freigegebenen Druckelementen des ersten und des zweiten Druckkopfes (C2, C1) bei einer einzelnen Querbewegung des Schlittens (34) gedruckten Schwade größer ist als die Breite einer Schwade, welche von nur dem ersten oder dem zweiten Druckkopf bei einer einzelnen Querbewegung des Schlittens gedruckt wird.

2. Drucker/Plotter nach Anspruch 1, bei dem der erste und der zweite Druckkopf (C2, C1) identische Anordnungen aus Druckelementen aufweisen.

3. Drucker/Plotter nach Anspruch 2, bei dem die vorgegebene Strecke (Δd) genau so groß ist wie die Strecke (dn) zwischen zwei benachbarten Druckelementen des ersten und des zweiten Druckkopfs (C2, C1) längs der Medienachse.

4. Drucker/Plotter nach Anspruch 1, 2 oder 3, bei dem die Druckköpfe (C1, C2) thermische Tintenstrahldruckköpfe sind und die einzelnen Druckelemente (93 bis 99) Düsen sind.

5. Drucker/Plotter nach Anspruch 1, 2, 3 oder 4, bei dem die Ausrichtvorrichtung getrennte Offset-Montage-Platten (56, 58) auf dem Schlitten (34) für jeden der Druckköpfe (C2, C1) aufweist.

6. Drucker/Plotter nach Anspruch 1, 2, 3, 4 oder 5, bei dem die Ausrichtvorrichtung Auswählmittel (42) zum Abschalten bestimmter Druckelemente an einem, dem ersten oder dem zweiten Druckkopf aufweist.

7. Drucker/Plotter nach Anspruch 1, 2, 3, 4, 5 oder 6, bei dem die Ausrichtvorrichtung mechanische Einstellmittel (69) zum Verändern der physischen Position eines, des ersten oder des zweiten Druckkopfes (C2, C1) längs der Medienachse (X) aufweist.

8. Drucker/Plotter nach Anspruch 7, bei dem die mechanischen Einstellmittel eine flexible Befestigungsvorrichtung (70) aufweisen, damit einer, der erste oder der zweite Druckkopf (C2, C1) um eine Schwenkachse schwenken kann, welche parallel zu dem Schlitten-Abtastachse ist, sowie einen Nocken (69) aufweisen, der die Schwenkbewegung des ersten oder des zweiten Druckkopfes um die Schwenkachse bewirkt.

9. Drucker/Plotter nach einem der vorangehenden Ansprüche, der ferner zusätzliche Montagemittel zum Halten zusätzlicher Druckköpfe in Positionen, welche in der Medien-Vorschubrichtung gegenüber dem ersten und dem zweiten Druckkopf sowie gegeneinander versetzt sind, aufweist.

## Revendications

1. Imprimante/table traçante à jet d'encre thermique comprenant un groupement d'éléments imprimants individuels (93-99) sur des têtes d'impression à jet d'encre multiples (C2, C1), comprenant :
un chariot (34) mobile le long d'un axe de balayage du chariot ;
une première tête d'impression (C2) montée amovible sur ledit chariot (34), ladite première tête d'impression ayant une pluralité d'éléments imprimants (93, 95) ;
une deuxième tête d'impression (C1) séparée de ladite première tête d'impression (2) et montée amovible sur ledit chariot (34), ladite deuxième tête d'impression (C1) ayant une pluralité d'éléments imprimants (97, 99) et étant déportée par rapport à ladite première tête d'impression (C2) le long de l'axe (X) du milieu ; et
des moyens d'alignement (42, 69) servant à désinhiber un groupement d'éléments imprimants sélectionnés de ladite deuxième tête d'impression (C1) et un groupement d'éléments imprimants sélectionnés de ladite première tête d'impression (C2), et à régler la position relative, le long de l'axe du milieu, du groupement désinhibé de ladite deuxième tête d'impression (C1) par rapport au groupement désinhibé de ladite première tête d'impression (C2), de telle manière que les groupements désinhibés ne soient pas à recouvrement le long de l'axe (X) du milieu et de telle manière que les éléments imprimants désinhibés de la deuxième tête d'impression (C1) et les éléments imprimants désinhibés de la première tête d'impression (C2) qui sont les plus rapprochés le long de l'axe (X) du milieu soient décalés d'une distance prédéterminée (Δd) le long de l'axe du milieu, de sorte que la largeur d'un andain imprimé par les éléments imprimants désinhibés desdites première et deuxième têtes d'impression (C2, C1) en une seule et même translation dudit chariot (34) est plus grande que la largeur d'un andain imprimé seulement par l'une desdites première et deuxième têtes d'impression dans une seule et même translation dudit chariot.

2. Imprimante/table traçante selon la revendication 1, dans laquelle lesdites première et deuxième tête d'impression (C1, C2) ont des groupements identiques d'éléments d'impression.

3. Imprimante/table traçante selon la revendication 2, dans laquelle ladite distance prédéterminée (Δd) est égale à la distance (dn) le long de l'axe du milieu entre deux éléments imprimants adjacents desdites première et deuxième têtes d'impression (C2, C1).

4. Imprimante/table traçante selon la revendication 1, 2 ou 3, dans laquelle lesdites têtes d'impression (C2, C1) sont des têtes d'impression à jet d'encre thermique et lesdits éléments imprimants individuels (93-99) sont des buses.

5. Imprimante/table traçante selon la revendication 1, 2, 3 ou 4, dans laquelle lesdits moyens d'alignement comprennent des plaques de montage décalées séparées (56, 58) prévues sur ledit chariot (34) respectivement pour lesdites têtes d'impression (C2, C1).

6. Imprimante/table traçante selon la revendication 1, 2, 3, 4 ou 5, dans laquelle lesdits moyens d'alignement comprennent des moyens de sélection (42) servant à mettre à l'arrêt certains des éléments imprimants de l'une desdites première et deuxième têtes d'impression.

7. Imprimante/table traçante selon la revendication 1, 2, 3, 4, 5 ou 6, dans laquelle lesdits moyens d'alignement comprennent des moyens de réglage mécaniques (69) servant à changer la position typique de l'une desdites première et deuxième têtes d'impression (C2, C1) le long de l'axe (X) du milieu.

8. Imprimante/table traçante selon la revendication 7, dans laquelle lesdits moyens de réglage mécaniques comprennent des moyens de fixation flexibles (70) destinés à permettre à l'une donnée desdites première et deuxième têtes d'impression (C2, C1) de pivoter autour d'un axe d'articulation qui est parallèle à l'axe de balayage du chariot, et une came (69) servant à faire pivoter cette tête donnée desdites première et deuxième têtes d'impression autour de l'axe d'articulation.

9. Imprimante/table traçante selon une des revendications précédentes, qui comprend en outre des moyens de montage additionnels servant à maintenir des têtes d'impression additionnelles dans des positions déportées par rapport auxdites première et deuxième têtes d'impression ainsi que déportées l'une par rapport à l'autre dans la direction d'avance du milieu.
